# EUROPEAN PATENT APPLICATION

(11) **EP 3 882 150 A1**
(43) Date of publication of application: **22.09.2021**
(21) Application number: 21162776.5
(22) Date of filing: 16.03.2021
(51) Int. Cl.: B64D 11/06, B60N 2/90, A47C 7/72

(54) **ELECTRICAL POWER GENERATION IN AIRCRAFT SEATS**

(30) Priority: 16.03.2020 US 202016819843
(71) Applicant: B/E Aerospace, Inc., Winston Salem, NC 27105 (US)
(72) Inventor: UDRISTE, Daniel, Winston-Salem, NC 27106 (US)
(74) Representative: Algemeen Octrooi- en Merkenbureau B.V.

(57) **Abstract**

An electrical generation system for being disposed in an aircraft seat (100) includes thermoelectric generators (102, 104) in elastomeric lattices to maintain the hot side of the thermoelectric generators proximal to the body of the passenger and the cold side of the thermoelectric generators in ambient air, away from the insulating properties of the aircraft seat. Elastomeric lattices and thermoelectric generators may be disposed in both the seat cushion (106) and seat back (108). A power regulator and storage device (110) store the electrical power from the thermoelectric generators and discharges as necessary over time.

## Description

Passengers in aircraft frequently utilize portable electronic devices. Those portable electronic devices require power and are typically charged via low voltage USB power connections. Delivering power to passengers in their seats is problematic; aircraft were not generally designed with power outlets in mind for each passenger, and retrofitting each seat with existing technology would require extensive changes to in-aircraft electrical systems.

It would be advantageous if a system existed for efficiently delivering low voltage power for individual aircraft passengers without significant structural or electrical changes to the aircraft.

In one aspect the current invention is directed to an electrical generation system configured to be disposed in an aircraft seat with a thermoelectric generator in an elastomeric lattice to maintain the hot side of the thermoelectric generator proximal to the body of a passenger when a passenger is seated in the aircraft seat and the cold side of the thermoelectric generator in ambient air, away from the insulating properties of the aircraft seat.

Elastomeric lattices and thermoelectric generators may be disposed or at least configured to be disposed in both the seat cushion and seat back. A power regulator and storage device store the electrical power from the thermoelectric generators and discharges as necessary over time.

In a second aspect, the current invention is directed to an aircraft seat comprising the electrical generation system of the first aspect.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

The numerous advantages of the embodiments of the current invention may be better understood by those skilled in the art by reference to the accompanying figures in which:
FIG. 1 shows an environmental view of an electrical power generation system according to the current invention;
FIG. 2 shows an aircraft seat suitable for implementing the current invention;
FIG. 3 shows an environmental view an aircraft seat according to the current invention;
FIG. 4 shows an environmental view an aircraft seat according to the current invention;
FIG. 5A shows an exemplary embodiment of an aircraft seat cushion suitable for implementing the current invention;
FIG. 5B shows an exemplary embodiment of an aircraft seat cushion suitable for implementing the current invention;
FIG. 6 shows an exploded, side view of an electrical power generation system according to the current invention;
FIG. 7 shows a perspective view of a seat cushion suitable for implementing the current invention;
FIG. 8 shows a block diagram of an electrical power generation system according to the current invention;

Before explaining at least one embodiment of the current invention in detail, it is to be understood that the current invention is not limited in its application to the details of construction and the arrangement of the components or steps or methodologies set forth in the following description or illustrated in the drawings. In the following detailed description of embodiments of current invention , numerous specific details are set forth in order to provide a more thorough understanding of the current invention. However, it will be apparent to one of ordinary skill in the art having the benefit of the instant disclosure that the current invention may be practiced without these specific details. In other instances, well-known features may not be described in detail to avoid unnecessarily complicating the instant disclosure. The current invention is capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the current invention . The appearances of the phrase "in some embodiments" in various places in the specification are not necessarily all referring to the same embodiment, and embodiments of the current invention may include one or more of the features expressly described or inherently present herein, or any combination of sub-combination of two or more such features, along with any other features which may not necessarily be expressly described or inherently present in the instant disclosure.

Broadly, embodiments of the current invention are directed to an electrical generation system in an aircraft seat with a thermoelectric generator in an elastomeric lattice to maintain the hot side of the thermoelectric generator proximal to the body of the passenger and the cold side of the thermoelectric generator in ambient air, away from the insulating properties of the aircraft seat. When reference is made in this document to a body (of a passenger), this is to be interpreted as a body of a passenger when a passenger is seated in the aircraft seat.

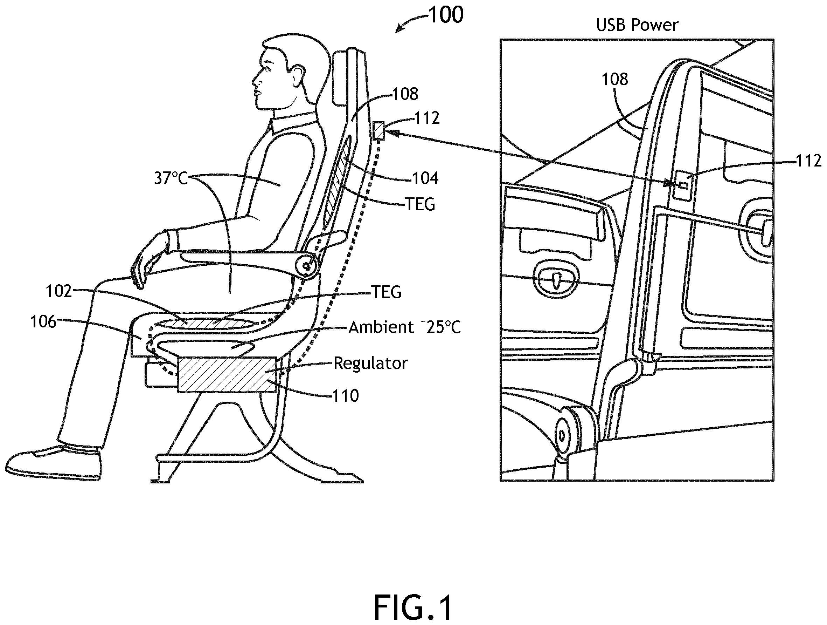

Referring to FIG. 1, an environmental view of an electrical power generation system according to an exemplary embodiment is shown. An aircraft seat 100 includes one or more thermoelectric generators 102, 104. The thermoelectric generators 102, 104 may be disposed in the seat cushion 106, the seat back 108, or both. Thermoelectric generators 102, 104 produce direct electrical current via a temperature differential; in the case of an aircraft seat, the temperature differential is produced by a passenger (approximately 37° C) in contact with the hot side and the ambient cabin air (approximately 25° C) in contact with the cold side. The electrical power generated by the thermoelectric generators 102, 104 may be stored in a regulator 110 having a battery. Such temperature differential may be sufficient to power a low voltage USB power connection 112 disposed in a rear surface of the aircraft seat 100. Because power availability is based on the regulator 110 being routinely changed by a passenger in the aircraft seat 100, power to the USB power connection 112 may be inconsistent. In at least one embodiment, an LED indicator may provide a colored indication of whether power is available at the USB power connection 112.

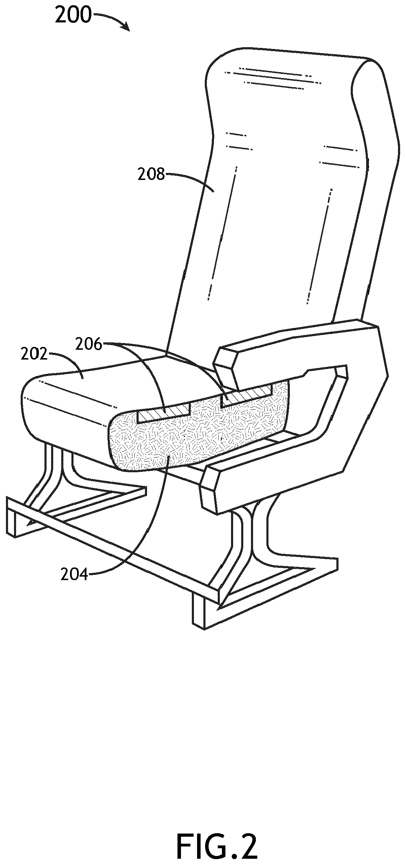

Referring to FIG. 2, an aircraft seat 200 suitable for implementing exemplary embodiments is shown. The aircraft seat 200 includes a seat cushion 202 having insulating padding 204 and one or more cells of elastomeric lattice material 206 disposed in one or more corresponding voids of the insulating padding 204.

In at least one embodiment, the aircraft seat 200 also includes a seat back 208 having insulating padding and one or more cells of elastomeric lattice material disposed in one or more corresponding voids of the insulating padding.

Because thermoelectric generators operate on a temperature differential, insulating padding 204 tends to reduce the efficiency of the thermoelectric generators because it normalizes the temperature and reduces the temperature differential. The elastomeric lattice material 206 creates a channel for airflow to maintain the temperature differential.

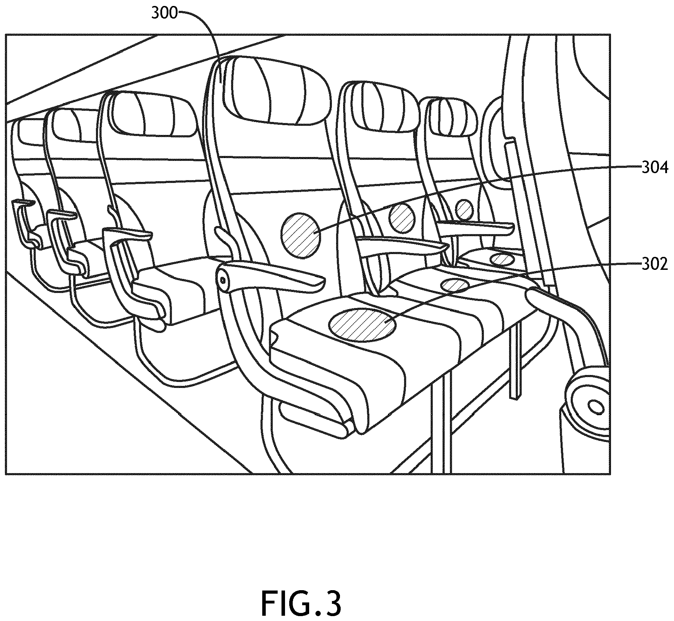

Referring to FIG. 3, an environmental view an aircraft seat 300 according to an exemplary embodiment is shown. The aircraft seat 300 may include thermoelectric generators 302, 304 disposed in a seat cushion and a seat back. The thermoelectric generators 302, 304 are disposed to maximize contact with a passenger in the seat.

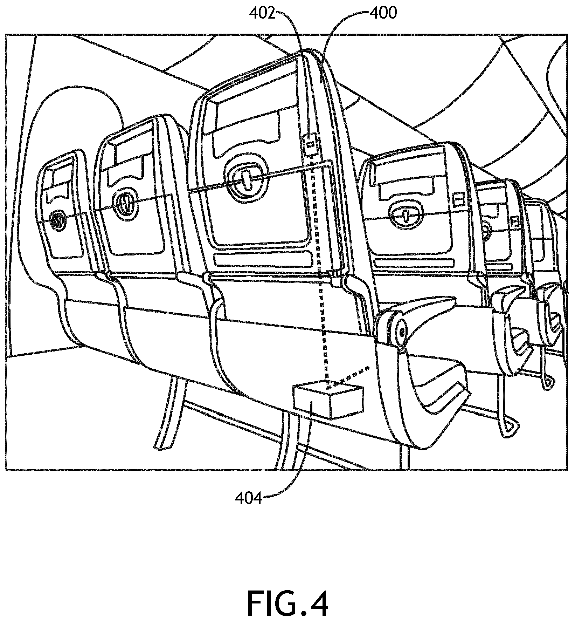

Referring to FIG. 4, an environmental view an aircraft seat 400 according to an exemplary embodiment is shown. Where the aircraft seat 400 includes one or more thermoelectric generators in the seat cushions, a power regulator 404 disposed in the seat receives electrical power and steps the corresponding voltage up or down as necessary to supply a standard voltage to a USB power connection 402 disposed in a rear surface of the aircraft seat 400. In at least one embodiment, the USB power connection 402 may include an LED indicating whether or not the USB power connection 402 is powered.

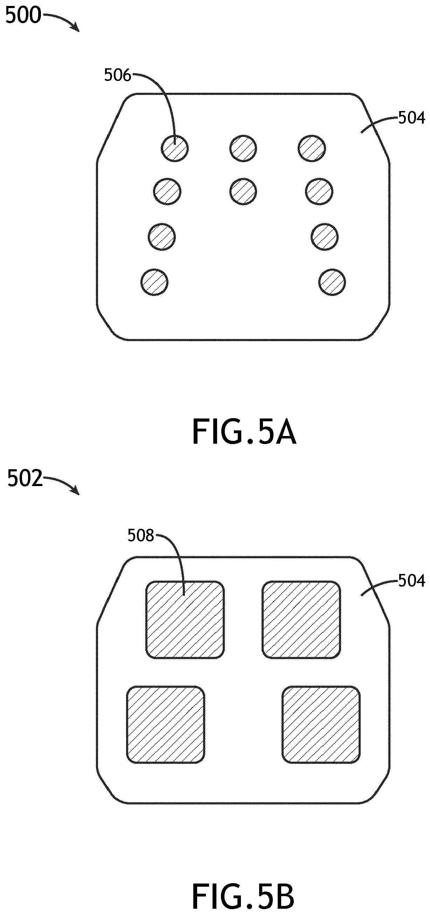

Referring to FIGS. 5A-5B, exemplary embodiments of an aircraft seat cushion 500, 502 suitable for implementing exemplary embodiments are shown. In at least one embodiment, a seat cushion 500 may include a solid foam component 504, for example open cell foam, and a plurality of elastomeric lattice inserts 506. In at least one embodiment, the seat cushion 500 may include open cell foam disposed at least at the top surface of the seat cushion 500, and optionally closed cell foam at depth in the cushion for flotation. The elastomeric lattice inserts 506 may be generally concentrated in the region or portion of the seat cushion 500 subject to the highest load-bearing demands when a passenger is seated. With the elastomeric lattice inserts 506 concentrated near the back and sides of the seat bottom, the elastomeric lattice inserts 506 are disposed at the points of maximum passenger contact for a passenger seated in the seat, and therefore greatest temperature differential.

Alternatively, or in addition, a seat cushion 502 includes a plurality of elastomeric lattice inserts 508 disposed in a plurality of voids or recesses formed in the solid foam component 504 with the plurality of elastomeric lattice inserts 506 disposed in load-bearing regions of the solid foam component 504. The seat cushion 502 may have fewer, but larger elastomeric lattice inserts 506. Breathability of the elastomeric lattice inserts 508 facilitates ventilation of the enclosed thermoelectric generators.

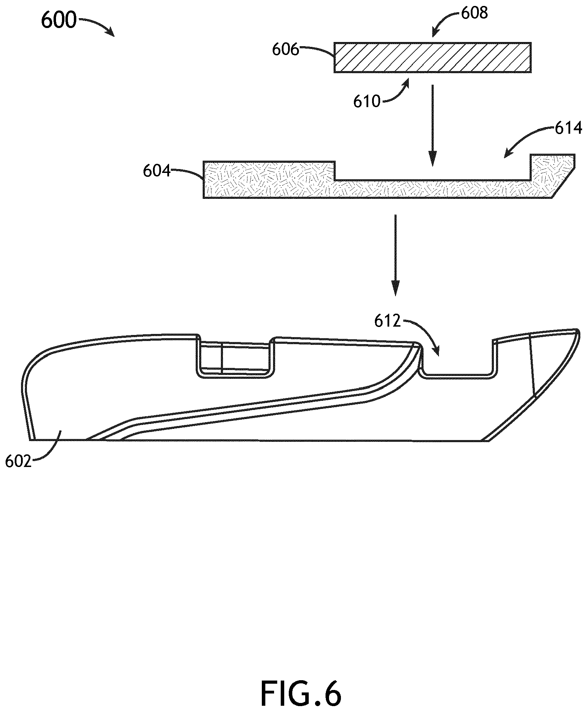

Referring to FIG. 6, an exploded, side view of an electrical power generation apparatus or system 600 according to an exemplary embodiment is shown. An aircraft seat cushion 602 defines one or more voids 612 or recesses configured to receive a corresponding elastomeric lattice insert 604. The elastomeric lattice insert 604 allows ambient air to circulate around the void 612, even when a passenger is seated.

The elastomeric lattice insert 604 further defines a thermoelectric generator recess 614 to hold a thermoelectric generator 606 with the hot side 608 proximal to a top surface of the aircraft seat cushion 602 where a passenger would be seated. Furthermore, the thermoelectric generator recess 614 maintains the cold side 610 of the thermoelectric generator 606 in the void 612 such that the ambient airflow may efficiently cool the cold side 610.

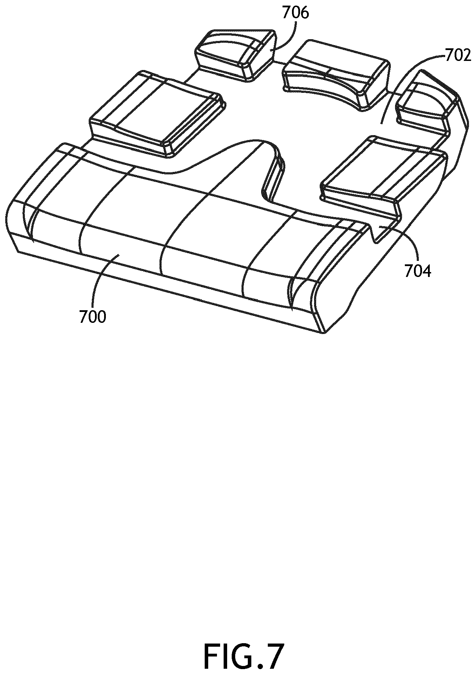

Referring to FIG. 7, a perspective view of a seat cushion 700 suitable for implementing an exemplary embodiment is shown. The seat cushion 700 defines a void 702 with lateral openings 704 to facilitate ambient airflow. In at least one embodiment, the void 702 may further define one or more rear openings 706 to further facilitate ambient air flow.

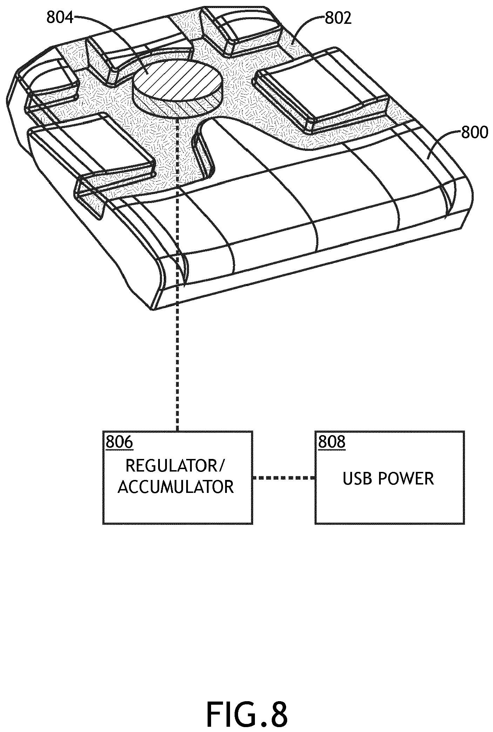

Referring to FIG. 8, a block diagram of an electrical power generation system according to an exemplary embodiment is shown. The system, disposed in an aircraft seat cushion 800, comprises an elastomeric lattice insert 802 with lateral openings and rear openings to facilitate ambient air flow around the cold side of a thermoelectric generator 804 disposed in the elastomeric lattice insert 800.

The system includes a power storage, like a regulator / accumulator 806 to receive electrical power from the thermoelectric generator 804 and discharge the electrical power to a USB power connection 808. The regulator / accumulator 806 may step voltage up or down as necessary to comply with USB standards.

It is believed that the current invention and many of its attendant advantages will be understood by the foregoing description of embodiments of the current invention, and it will be apparent that various changes may be made in the form, construction, and arrangement of the components thereof without departing from the broad scope of the current invention, defined by the appended claims, or without sacrificing all of their material advantages; and individual features from various embodiments may be combined to arrive at other embodiments. The form herein before described being merely an explanatory embodiment thereof, it is the intention of the following claims to encompass and include such changes. Furthermore, any of the features disclosed in relation to any of the individual embodiments may be incorporated into any other embodiment.

## Claims

1. An electrical power generation apparatus (600) configured to be disposed in an aircraft seat (100; 200; 300; 400), the apparatus (600) comprising:
at elastomeric lattice insert (506, 508; 604; 802) defining one or more thermoelectric generator recesses (614);
one or more thermoelectric generators (102, 104; 302, 304; 606); and
a power storage device (110; 404; 806),
wherein:
the one or more thermoelectric generator recesses (614) are configured to dispose a hot side (608) of the one or more thermoelectric generators (102, 104; 302, 304; 606) proximal to a body in an aircraft seat and dispose a cold side (610) of the one or more thermoelectric generators (102, 104; 302, 304; 606) proximal to a ventilated portion of the elastomeric lattice insert (506. 508; 604; 802).

2. The apparatus according to claim 1, wherein the elastomeric lattice insert (506, 508; 604; 802) is configured for insertion into a void (612; 702) disposed in a surface of a seat cushion (106, 202; 500; 502; 602; 700; 800) proximal to a body in the aircraft seat (100; 200; 300; 400).

3. The apparatus according to claim 1 or 2, wherein the elastomeric lattice insert (506, 508; 604; 802) defines an unobstructed airflow path through the seat cushion (106; 202; 500; 502; 602).

4. The apparatus according to one or more of the preceding claims, wherein the elastomeric lattice insert (506, 508; 604; 802) is configured for insertion into a void (612; 702) disposed in a surface of a seat back (108; 208) proximal to a body in the aircraft seat (100; 200; 300; 400).

5. The apparatus according to claim 4, further comprising:
an elastomeric lattice seat insert (506, 508; 604; 802) defining one or more thermoelectric generator recesses (614), wherein the elastomeric lattice seat insert (506, 508; 604; 802) is configured for insertion into a void (612; 702) disposed in a surface of a seat cushion (106; 202; 500; 502; 602; 700; 800) proximal to the body in the aircraft seat (100; 200; 300; 400).

6. The apparatus according to one or more of the preceding claims, further comprising a USB power connection (112; 402; 808) connected to the power storage device (110; 404; 808), the USB power connection (112; 402; 808) disposed in a rear surface of the aircraft seat (100; 200; 300; 400).

7. The apparatus according to claim 6, further comprising an LED configured to indicate that the power storage device (110; 404; 806) is charged.

8. An aircraft seat (100, 200) comprising an electrical power generator apparatus (600) according to one or more of the preceding claims.

9. The aircraft seat according to claim 8, further comprising a seat cushion (106; 202; 500; 502; 602; 700; 800) defining a void (612; 702) configured to receive the elastomeric lattice insert (506, 508; 604; 802), the void (612; 702) disposed in a surface of the seat cushion (106; 202; 500; 502; 602; 700; 800) proximal to a body in the aircraft seat (100; 200; 300; 400).

10. The aircraft seat according to claim 9, wherein the seat cushion (106; 202; 500; 502; 602; 700; 800) defines one or more lateral openings (704) configured to facilitate ambient air flow.

11. The aircraft seat according to claim 9 or 10, wherein the seat cushion (106; 202; 500; 502; 602; 700; 800) defines one or more rear openings (706) configured to facilitate ambient air flow.

12. The aircraft seat according to one or more of claims 8-11, further comprising a seat back defining a void (612; 702) configured to receive the elastomeric lattice insert (506, 508; 604; 802), the void disposed in a surface of the seat back (108; 208) proximal to a body in the aircraft seat (100; 200; 300; 400).

13. The aircraft seat according to claim 12, further comprising:
an elastomeric lattice seat insert (506, 508; 604; 802) defining one or more thermoelectric generator recesses (612); and
a seat cushion (106; 202; 500; 502; 602; 700; 800) defining a void (612; 702) configured to receive the elastomeric lattice seat insert (506, 508; 604; 802), the void (612; 702) disposed in a surface of the seat cushion (106; 202; 500; 502; 602; 700; 800) proximal to the body in the aircraft seat (100; 200; 300; 400).
